(19) Europäisches Patentamt
European Patent Office
Office européen des brevets

(11) **EP 1 002 405 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(21) Anmeldenummer: **98948709.5**

(22) Anmeldetag: **03.08.1998**

(51) Int Cl.:
*H04L 27/26* (2006.01)

(86) Internationale Anmeldenummer:
**PCT/DE1998/002219**

(87) Internationale Veröffentlichungsnummer:
**WO 1999/008427 (18.02.1999 Gazette 1999/07)**

(54) **VERFAHREN UND ANORDNUNG ZUR KOMBINIERTEN MESSUNG DES ANFANGS EINES DATENBLOCKS UND DES TRÄGERFREQUENZVERSATZES IN EINEM MEHRTRÄGERÜBERTRAGUNGSSYSTEM IN F KLASSEN**

METHOD AND DEVICE FOR COMBINED MEASUREMENT OF THE BEGINNING OF A DATA BLOCK AND CARRIER FREQUENCY SHIFT IN A MULTICARRIER TRANSMISSION SYSTEM IN F CLASSES

PROCEDE ET DISPOSITIF POUR LA MESURE COMBINEE DU DEBUT D'UN BLOC DE DONNEES ET DU DEPLACEMENT DE LA FREQUENCE PORTEUSE DANS UN SYSTEME DE TRANSMISSION A PORTEUSES MULTIPLES DANS DES CLASSES F

(84) Benannte Vertragsstaaten:
**DE FR GB**

(30) Priorität: **05.08.1997 DE 19733825**

(43) Veröffentlichungstag der Anmeldung:
**24.05.2000 Patentblatt 2000/21**

(73) Patentinhaber:
• **Infineon Technologies AG**
**81669 München (DE)**
Benannte Vertragsstaaten:
**DE**
• **SIEMENS AKTIENGESELLSCHAFT**
**80333 München (DE)**
Benannte Vertragsstaaten:
**FR GB**

(72) Erfinder: **STANTCHEV, Branimir**
**D-01307 Dresden (DE)**

(74) Vertreter: **Reinhard - Skuhra - Weise & Partner**
**Postfach 44 01 51**
**80750 München (DE)**

(56) Entgegenhaltungen:
**EP-A- 0 529 421        GB-A- 2 307 155**

• **SCHMIDL T M ET AL: "LOW-OVERHEAD, LOW-COMPLEXITY BURST SYNCHRONIZATION FOR OFDM" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 3, 23. Juni 1996, Seiten 1301-1306, XP000625022 IEEE, New York, US in der Anmeldung erwähnt**
• **STANTCHEV B ET AL: "Burst synchronization for OFDM-based cellular systems with separate signaling channel" VTC '98. 48TH IEEE VEHICULAR TECHNOLOGY CONFERENCE. PATHWAY TO A GLOBAL WIRELESS REVOLUTION (CAT. NO.98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, Seiten 758-762 vol.2, XP002089525 ISBN 0-7803-4320-4, 1998, IEEE, New York, US**

EP 1 002 405 B1

**Beschreibung**

Die Erfindung betrifft ein Verfahren und eine Anordnung zur empfängerseitigen Bestimmung des Anfanges vom ersten Symbol und des Trägerfrequenzversatzes beim einmaligen Empfang eines Mehrträgersignals bestehend aus einer Reihenfolge von Datensymbolen, die einen Datenblock bilden. Die Bestimmung des Symbolanfangs regelt den Symboltakt zur Demodulation der einzelnen Symbole. Der Schätzwert des Trägerfrequenzversatzes dient als Stellgröße für eine Frequenzkorrektur im Empfänger sowohl beim Empfangen als auch beim späteren Senden von Datensignalen. Dabei wird ein Testsignal sendeseitig zu einem ungewissen Zeitpunkt zusammen mit einem Datenblock ausgestrahlt und von einer empfängerseitigen Anordnung gesucht und ausgewertet. Es wird eine Konstruktionsregel von Testsignalen angegeben, die die kombinierte Schätzung des Anfangs vom ersten Datensymbol und des Trägerfrequenzversatzes zwischen Sender und Empfänger ermöglichen.

Die Erfindung ist geeignet für eine vorwärtsarbeitende digitale Synchronisation von drahtlosen oder drahtgebundenen Empfängern, die OFDM (Orthogonal Frequency Division Multiplexing) Signale zur Übertragung von einzelnen unregelmäßig ausgesendeten Datenblöcken verarbeiten. Die Erfindung betrifft den allgemeinen Fall einer Ein-Schuß-Synchronisation, die für jeden einzelnen Datenblock unabhängig von vorangegangenen oder zukünftigen Synchronisationsversuchen ausgeführt werden kann. Ihre Genauigkeit eignet sich für hochratige OFDM Signale, die für hohe Bandbreiteeffizienz möglicherweise höherwertige Modulation (z.B. 8-DPSK oder 16-QAM) verwenden. OFDM wird derzeit als geeignete Modulationstechnik für zukünftige breitbandige multimediale Mobilfunksysteme und breitbandige drahtlose Netze angesehen.

In der GB 2 307 155 A ist ein Synchronisationsverfahren für OFDM beschrieben, das die im Signal vorhandenen Schutzintervalle verwendet.

Die Synchronisation von OFDM Signalen wurde ferner in einem europäischen Patent: Erfinder Andreas Müller, Anmeldenummer 92113788.1, in F. Classen: "Systemkomponenten für eine terrestrische digitale mobile Breitbandübertragung", Dissertation an der RWTH Aachen, Shaker Verlag, Aachen 1996, und in den Konfernezveröffentlichungen:

* M. Schmidl, D. Cox: "Low-overhead, low-complexity [burst] synchronization for OFDM," Konferenzband. IEEE International Conference on Communications '96, S. 1301- 1306,
* M. Sandell, J. Beek, P. Börjesson, "Timing and frequency synchronization in OFDM systems using the cyclic prefix," Konferenzband, International Symposium on Synchronization, Essen, Deutschland, Dezember 1995, S. 16-19,

behandelt. Einige bisherige Arbeiten über die Synchronisation von OFDM Empfängern schlugen die Aussendung eines zeitlich periodischen Testsignals bestimmter Länge vor, das vom Empfänger nach seiner Periodizität ausgewertet wird und zur Bestimmung des Anfangs eines Datenblocks oder eines eventuellen Trägerfrequenzversatzes zwischen Sender und Empfänger verwendet wird. Es wurden dabei Verfahren für diese Auswertung sowohl vor als auch nach der Berechnung der für die Demodulation von OFDM Signalen verwendeten Fast Fourier Transformation (FFT) angegeben.

Nachteilig bei bekannten Verfahren und Anordnungen ist es, daß sie jeweils durch mindestens eins der folgenden Merkmale gekennzeichnet sind:

- es wird nur ein Teil der gesamten Synchronisation des Empfängers behandelt, wobei die restliche Synchronisationsaufgaben als ideal abgeschlossen vorausgesetzt werden: ein Beispiel ist die Beschreibung eines Verfahrens zur Schätzung des Trägerfrequenzversatzes wobei eine ideale Symboltaktsynchronisation vorausgesetzt wird
- es wird eine regelmäßige Wiederholung von Testsignalen zur Empfängersynchronisation festgelegt, oder/und es werden Mittelungen über mehrere Synchronisationsabläufe bzw. Testsignale für eine ausreichende Genauigkeit der Synchronisation benötigt; während dieser Ansatz bei Rundfunkanwendungen günstig ist, ist er bei unregelmäßiger Übertragung von Datenblöcken in zwei Übertragungsrichtungen unmöglich oder mit großem Aufwand realisierbar
- die zu realisierenden Rechenoperationen pro Synchronisationsablauf richten sich nicht nach einer minimalen Verarbeitungskomplexität seitens der Hardware.

OFDM ist ein Mehrträgermodulationsverfahren. Das OFDM Sendesignal $s(t)$ im Basisband besteht aus der zeitlichen Reihenfolge einzelner OFDM Symbolsignale $g_i(t)$ der Dauer $T_S$:

$$s(t) = \sum_i g_i(t - iT_S) \text{ mit}$$

$$g_i(t) = \sum_k S_{i,k} e^{j2\pi k F_\Delta t} b(t), \text{ und dem Basisimpuls} \tag{1}$$

$$b(t) = \begin{cases} 1 & , & T_G \le t \le T \\ 0 & , & sonst \end{cases}$$

Der Summationsindex i stellt den Symboltakt und $k$ - den Subträger der Frequenz $kF_\Delta$ dar. Das OFDM Symbolsignal $gi(t)$ besteht aus der Superposition von $M$ (z.B. $M=49$) Subträgern $e^{j2\pi kF\Delta/\Delta t}$, die unabhängig voneinander durch die komplexen Datensymbole $S_{i,k}$ moduliert werden. Der Vektor aller Symbole $S_{i,k}$ für einen festen Symboltaktwert $i$ wird als Symbolblock $s_i$ bezeichnet. Die Superposition, auch Modulation genannt, wird digital durch eine Inverse Fast Fourier Transformation (IFFT) der Länge $N_{FFT}$ realisiert. Es gilt $N_{FFT} \cdot M$, wobei $M$ Eingabewerte der IFFT mit $S_{i,k}$ identisch sind und die restlichen $(N_{FFT} - M)$ Eingabewerte mit Null belegt werden. Die Demodulation des OFDM Signals wird durch eine FFT der Länge $N_{FFT}$ umgesetzt. Weiterhin werden folgende Parameter definiert:

$T$ - genutzte Symboldauer
$T_G$ - Schutzintervall, das mindestens so lang wie der maximale Echo des Kanals ist
$F_A$ - Subträgerabstand

Es gelten die Relationen $T_S = T \div T_G$ und $F_\Delta = FT$. Für praktische Anwendungen gilt $T_G\ 0.25T_S$.
Ein Datenblock besteht aus einer Reihenfolge von mindestens einem OFDM Symbol $gi(t)$. Dieser wird mit einem Testsignal versehen, das entweder vor dem Datenblock oder mitten im Datenblock steht. Im ersten Fall wird das Testsignal als Präambel, im zweiten Fall - als Midämbel bezeichnet. In einer praktischen Implementierung eines Mehrträgerübertragungssystems gilt die Voraussetzung, daß:

- die zeitliche Eigenschaften des Übertragungskanal während der Dauer des Testsignals $2T_S$ näherungsweise konstant sind
- die Frequenzeigenschaften des Übertragungskanal über einen Frequenzabschnitt von mindestens $2F_\Delta$ näherungsweise konstant sind.

Aufgabe der Erfindung ist es, ein Verfahren anzugeben, das, gesteuert durch ein einmalig ausgesendetes Testsignal und mit Rücksicht auf minimalen Verarbeitungsaufwand, den genauen Anfang des ersten Datensymbols und den Trägerfrequenzversatz zwischen Sender und Empfänger in einem mit diesem Testsignal versehenen Datenblock kombiniert bestimmt.
Erfindungsgemäß wird diese Aufgabe vom Empfänger durch Beobachten des Empfangssignals und mittels der Gesamtheit und der Reihenfolge der in Anspruch 1 genannten Verfahrensschritten gelöst, um dann:

- den OFDM Symboltakt für die Demodulation der einzelnen Subträgersymbole vorzugeben
- eine digitale Frequenzkorrektur anzusteuern
- die Frequenzsynthese im hochfrequenten Teil des Empfängers zu korrigieren.

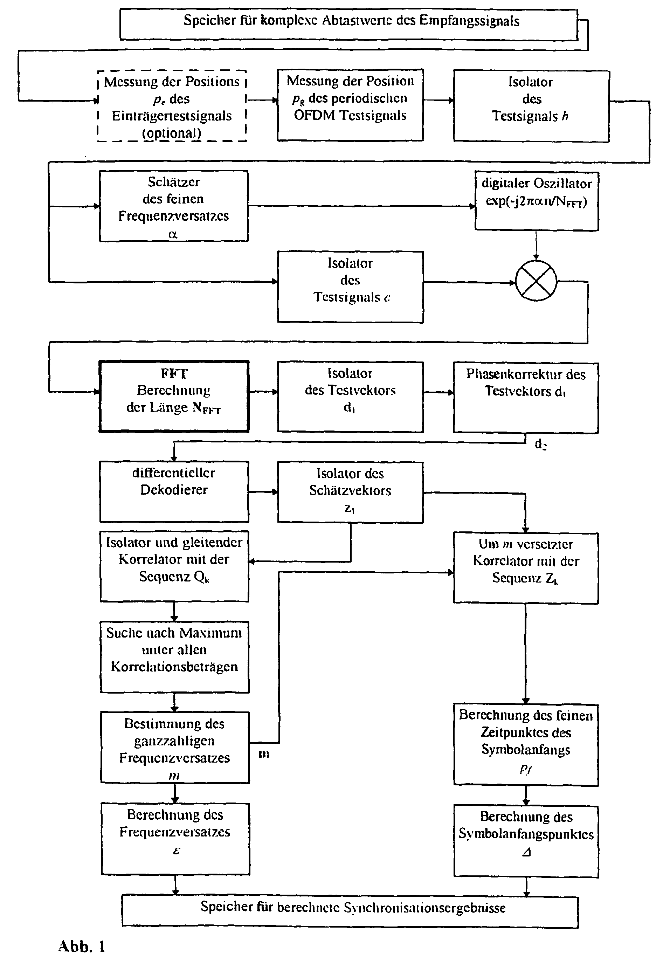

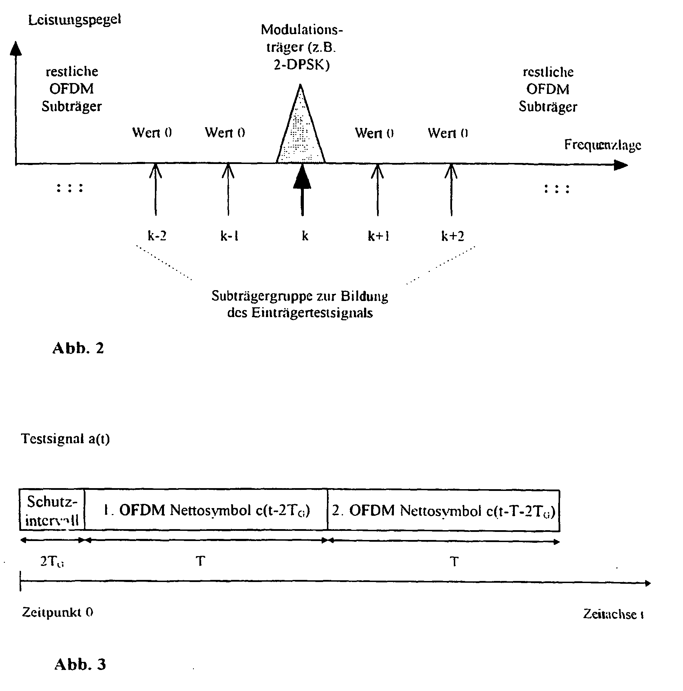

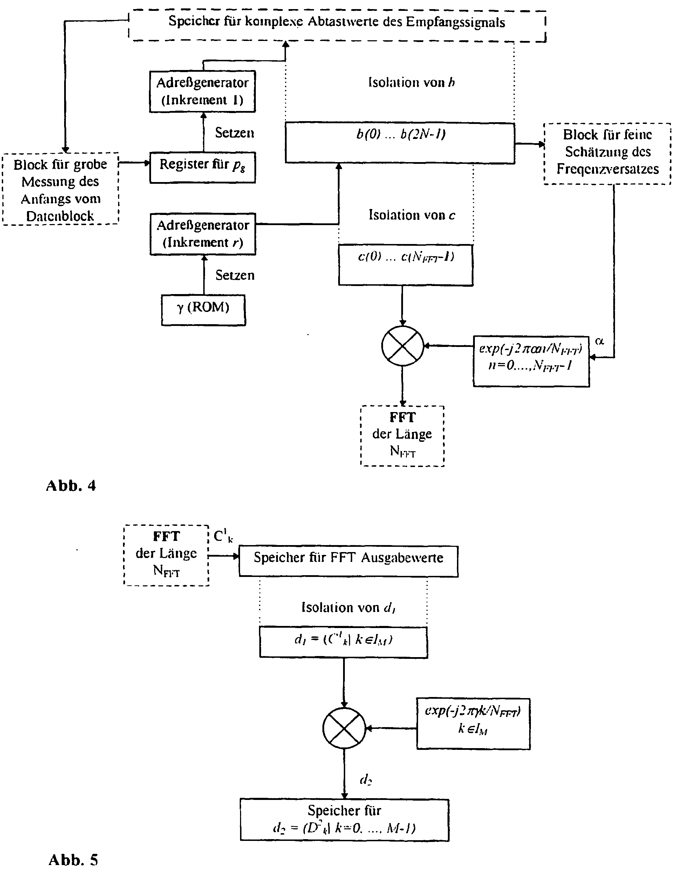

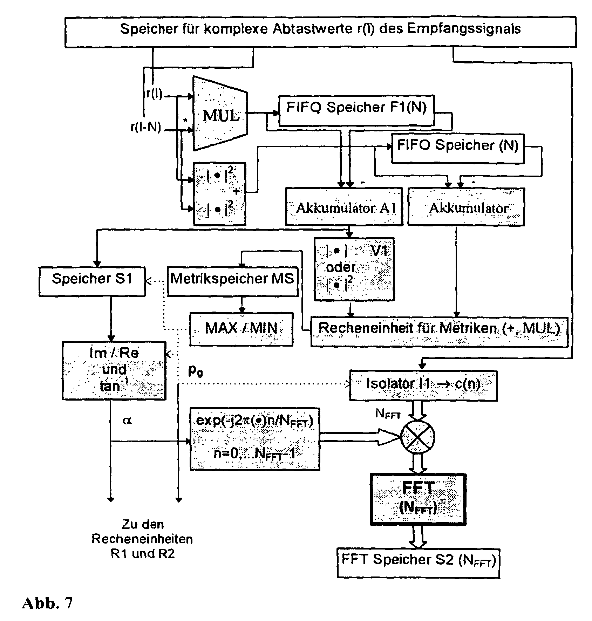

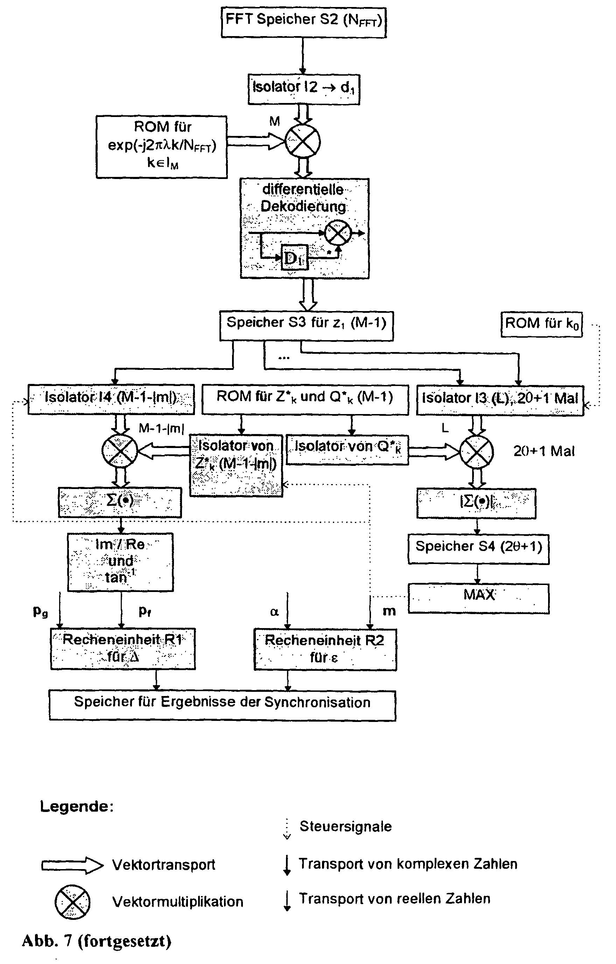

Der gesamte erfindungsgemäße Verarbeitungsablauf ist in Abb. 1 dargestellt. Weiterhin wird die Aufgabe mit einer Anordnung nach Anspruch 10 und Abb. 7 gelöst. Wesentlich an der Lösung ist es, daß mit dem Datenblock ein Mehrträgertestsignal mit periodischem zeitlichem Aufbau gemäß Abb. 3 ausgesendet wird. Die Auswertung des Mehrträgertestsignals erfolgt mittels der Schritte a) bis i) vom Anspruch 1. Die Konstruktion des Mehrträgertestsignals wird in Ansprüchen 4 und 5 angegeben. Dann ist es vorteilhaft, vor dem Mehrträgertestsignal ein Einträgertestsignal gemäß Ansprüchen 2 und 3 auszusenden, um dieses für die Bestimmung des Anfangs vom Datenblock zusätzlich und mit geringem Verarbeitungsaufwand zu nutzen. Die prinzipielle Erzeugung dieses Einträgertestsignals durch das Mehrträgerübertragungssystems ist in Abb. 2 dargestellt. Einzelne Verarbeitungsschritte, die in Abb. 4 bis 6 dargestellt sind, sind in einem Ausführungsbeispiel aufgeschlüsselt.
Wesentlich an der Lösung ist die optimale Schaltungsreihenfolge aller Verfahrensschritte nach Abb. 1, wobei das Vorhandensein noch unbekannter Parameter die Schätzung eines Parameters (Zeit oder Frequenz) im jeweiligen Schritt nicht behindert. Durch geeignete Isolation von Testsignalen bzw. Testvektoren wird kein Rauschen durch Intersymbolinterferenz (ISI) und Subträgerinterferenz bei der Parameterschätzung verursacht.

Der Hauptvorteil der Erfindung ist die kombinierte Schätzung des Symbolanfangs und des Frequenzversatzes durch einen einzigen Synchronisationsablauf. Vorteilhaft ist die geringe Anzahl an Rechenoperationen für den Synchronisationsablauf, vor allem die Tatsache, daß nur eine einzige FFT für die Synchronisation benötigt wird.

Ein Vorteil der Erfindung ist es, daß im Falle einer differentiellen Modulation auf jedem einzelnen Subträger in Zeitrichtung die für Synchronisation erforderliche FFT mittels einer nachfolgenden Phasenkorrektur für jeden nutzbaren Subträger zur Berechnung des ersten OFDM Referenzsymbols im Datenblock verwendbar ist. Nach dieser Phasenkorrektur kann weiterhin eine Kanalschätzung im Frequenzbereich gemacht werden, die für kohärente Demodulation oder für eine Entzerrung der Subträgersymbole im Frequenzbereich gebraucht wird.

Vorteilhafterweise läßt sich außerdem der ganzzahlige Trägerfrequenzversatz nach dem in Anspruch 6 angegebenen Verfahrensschritt besonders robust bestimmen. Präzise und mit geringem Verarbeitungsaufwand kann auch die feine Schätzung des Anfangs vom Datenblock im Verfahrensschritt gemäß Anspruch 7 berechnet werden. Deren kleine übertragungskanalabhängige Ungenauigkeit läßt sich durch eine Maßnahme nach Anspruch 8 kompensieren.

Ein wesentlicher Vorteil der Erfindung für drahtlose Anwendungen ist die zeitweise Nutzung einiger OFDM Subträger zur Übertragung eines Einträgertestsignals. Der Empfänger kann durch geeignetes schmalbandiges Herausfiltern dieses Testsignals und Einträgeroperationen leistungssparend und mit einer kleinen Anzahl von Rechenoperationen pro Zeiteinheit den Symboltakt und den Anfang des Datenblocks bestimmen. Dieser Schritt ist optional und besonders vorteilhaft für die zeitunkritische Anfangssynchronisation von mobilen Endgeräten. Eine entsprechende Skalierbarkeit des OFDM Modems auf Einträgerarbeitsmodus wird dabei vorausgesetzt.

Anhand der Abbildungen wird das folgende Ausführungsbeispiel beschrieben. Diese zeigen folgende Abläufe und Anordnungen:

Abb. 1:   Gesamter erfindungsgemäßer Verarbeitungsablauf zur Synchronisation
Abb. 2:   Prinzipielle Erzeugung des Einträgertestsignals durch das Mehrträgerübertragungssystem
Abb. 3:   Zeitlicher Aufbau des Mehrträgertestsignals
Abb. 4:   Verarbeitungsablauf zu der Isolation des FFT Eingangsvektors und der digitalen Frequenzkorrektur des feinen Trägerfrequenzversatzes
Abb. 5:   Verarbeitungsablauf zur Isolation und Phasenkorrektur eines Testvektors aus den FFT Werten
Abb. 6:   Verarbeitungsablauf zur Bestimmung des ganzzahligen Trägerfrequenzversatzes zwischen Sender und Empfänger
Abb. 7:   Schaltungsanordnung zur Ausführung des gesamten erfindungsgemäßen Verarbeitungsablaufes

In einem Ausführungsbeispiel wird das erfindungsgemäße Verfahren in seinen einzelnen Schritten und deren Abhängigkeiten gemäß Abb. 1 näher erläutert. Es wird eine Menge $I_M$ von IFFT-Indizes definiert, welche die in Gl. (I) definierten Symbole $S_{i,k}$, $k \in I_M$ enthalten:

$$I_M = \{ N_{FFT} - (M - int(M/2) - 1), \; N_{FFT} - (M - int(M/2)), \; ..., \; N_{FFT} - 2, \; N_{FFT} - 1, \; 0, \; 1, \; 2, \; ..., \; int(M/2) - 1,$$

$$int(M/2) \} \tag{2}$$

Mit $int(\cdot)$ wird die größte ganze Zahl kleiner oder gleich $\cdot$ bezeichnet. Das erste Element von $I_M$ entspricht der niedrigsten Frequenzlage im Spektrum des ausgestrahlten OFDM Signals $s(t)$.

In einem ersten Verfahrensschritt wird eine optionale grobe Messung des Anfangs des Datenblocks durch ein Einträgertestsignal durchgeführt.

Das Einträgertestsignal besteht aus einer modulierten komplexen Symbolsequenz $C_{e,i}$, $i = 0, ..., L_e-1$ der Länge $L_e$ mit einer sehr guten Autokorrelation. Es wird eine Gruppe benachbarter OFDM Subträger für die Dauer von mindestens $L_e$ OFDM Symbole zur Bildung des Einträgertestsignals verwendet. Mindestens ein Subträger aus dieser Gruppe wird dabei zur Modulation der Symbolsequenz $C_{c,i}$ verwendet. Die restlichen Subträger dieser Gruppe werden jeweils mit Null belegt, um ein Schutzband in Frequenzrichtung zu dem Rest des OFDM Signals zu bilden. Abb. 2 zeigt die prinzipielle Gruppenstruktur. Im Ausführungsbeispiel wird eine Gruppe von sechs benachbarten Subträgern mit IFFT-Indizes 14, 15, 16, 17, 18, 19 aus einer 128-IFFT betrachtet. Die Umtastung der Subträger 16 und 17 entspricht einer 2-FSK Modulation. In jedem OFDM Symbol wird genau einer dieser Subträger mit Null und der andere mit einem der komplexen Symbole $C_{e,i}$ belegt. Die Subträger 14, 15, 18, 19 werden jeweils mit Null belegt. Die Erfindung legt eine im Empfänger bekannte Zeit $t\Delta > 0$ fest, die zwischen der eventuellen Ausstrahlung des Einträgertestsignals und der nachfolgenden Ausstrahlung des Mehrträgertestsignals liegt.

Mittels des Einträgertestsignals mißt der Empfänger zuerst den Symboltakt des OFDM Signals durch ständiges schmalbandiges Auswerten des/der empfangenen OFDM Subträger, der/die zur Übertragung der Sequenz $C_{e,i}$ verwendet wird/werden. Dies erfolgt nach bekannten Verfahren, z.B. dem early-late Synchronisationsverfahren im Falle von 2-FSK. Dann erfolgt eine Messung des Ankunftszeitpunktes $p_e$ der Symbolsequenz $C_{e,i}$ durch laufende Korrelation. Die Erkennung dieser Sequenz zum Zeitpunkt $p_e$ ist ein Zeichen dafür, daß das Mehrträgertestsignal zum Zeitpunkt $(p_{e+}t_A)$ eintrifft. In einem Zeitfenster um diesen Zeitpunkt muß dann das Messen und Auswerten des Mehrträgertestsignals erfolgen. Dieser erfindungsgemäße Ansatz spart Rechenaufwand beim Synchronisationsablauf mittels des Mehrträgertestsignals zur Bestimmung des Anfangs des Datenblocks, wenn der Empfänger keinerlei Vorkenntnis über den zeitlichen Bezug hat.

In einem zweiten Verfahrensschritt wird eine grobe Messung des Anfangs des Datenblocks durch ein Mehrträgertestsignal (OFDM Testsignal) durchgeführt.

Das OFDM Testsignal $a(t)$, $0 \leq t < 2T_S$, im Basisband besteht aus zwei zusammenhängenden identischen Signalformen $c(t)$, $0 \leq t < T$, denen ein gemeinsames Schutzintervall der Dauer $2T_G$ vorgesetzt wird. Dieses verdoppelte Schutzintervall ist gleich dem Signalabschnitt $c(t)$ mit $0 \cdot T-2T_G \leq t < T$. Die zeitliche Struktur des OFDM Testsignals ist in Abb. 3 dargestellt. Das Signal $c(t)$ wird folgendermaßen erzeugt:

$$c(t) = \sum_{k \in I_M} C_k e^{j2\pi F_s t} , \; 0 \leq t \cdot T \tag{3}$$

und digital durch eine IFFT aus dem Symbolblock $c_I = (Ck|k \in I_M)$ berechnet. $c_I$ enthält eine periodisch erweiterte differentiell kodierte komplexe Trainingssequenz:

$$Q_k, k=0, ..., L\text{-}1 \tag{4}$$

mit konstanter Amplitude und sehr guten zyklischen Autokorrelationseigenschaften dar. Es handelt sich dabei um eine beliebige Folge der endlichen Länge L, deren zyklische Autokorrelation für gegeneinander verschobene Sequenzen einen kleinen Wert im Vergleich zu L hat (z.B. den Wert 1). Für eine einfache Signalverarbeitung im Empfänger ist es günstig, eine binäre Folge $Q_k$ zu verwenden.

Die Folge $Q_k$ wird auf beiden Seiten um $\theta$ Symbole periodisch erweitert, wo $\theta$ den Meßbereich des betragsmäßig maximalen Trägerfrequenzversatz als ganzzahliges Vielfaches von $F_\Delta$ festlegt. Es entsteht die Sequenz:

$$Q^{(z)}_k = Q_{(k \cdot L - \theta) \bmod L} , \; k=0, ..., L\text{-}1+2\theta \text{ mit } L+2\theta \leq M\text{-}1 \tag{5}$$

Um relativ kleine Amplitudenschwankungen des Signals $c(t)$ zu bekommen ist es günstig, daß $L+2\theta$ nicht viel größer als $L$ und nicht viel kleiner als $(M-I)$ ist. Es ist möglich $L+2\theta - (M-I)$ zu wählen. Falls $L+2\theta - (M-I)$ ist es weiterhin günstig, die restlichen $(M-I-L-2\theta)$ Subträger aus $I_M$ mit beliebigen komplexen Symbolen gleicher Amplitude zu belegen, so daß die Amplitudenschwankungen von $c(t)$ klein sind. Dies ist für die Vermeidung von negativen Nichtlinearitätseffekten auf der Übertragungsstrecke besonders vorteilhaft. Zu diesem Zweck wird folgende beliebige und im Empfänger bekannte komplexe Symbolfolge $X_k$ der Mindestlänge Eins definiert:

$$X_k, k=0, ..., M_r\text{-}1 \text{ mit } M_r = (M-L-2\theta) \tag{6}$$

Weiterhin wird eine Symbolfolge $Z_k$, $k=0, ..., M\text{-}2$ folgendermaßen gebildet:

    1. Fall: $(M-1) = L+2\theta$

$$Z_k = \begin{cases} X_{k+1} & , \quad k = 0,\ldots,((M_r - 1)/2) - 1 \\ Q^{(z)}_{k-int((M_r-1)/2)} & , \quad k = int((M_r - 1)/2),\ldots, M - 2 - round((M_r - 1)/2) \\ X_{k+1-M+M_r} & , \quad k = M - round((M_r - 1)/2) - 1,\ldots, M - 2 \end{cases} \tag{7}$$

2. Fall: $(M-1) = L+2\theta$

$$Z_k = Q^{(z)}_k, \qquad k = 0,\ldots, M - 2 \tag{8}$$

Mit $round(\cdot)$ wird die kleinste ganze Zahl größer oder gleich $\cdot$ bezeichnet.

Es wird durch differentielle Kodierung von $Z_k$ eine Symbolfolge $D_k$, $k=0, \ldots, M-1$ gebildet:

$$D_k = \begin{cases} X_0 & , \quad k = 0 \\ D_{k-1} Z_{k-1} & , \quad k = 1,\ldots, M - 1 \end{cases} \tag{9}$$

Die Symbole $D_k$, $k = 0, \ldots, M-1$ werden auf die Subträgersymbole $C_k$, $k \in I_M$ abgebildet. Diese Abbildung erfolgt durch die Relation:

$$C_{[k]} = D_k, \quad k = 0, \ldots, M-1 \tag{10}$$

$[\cdot]$ bezeichnet dabei das Element aus $I_M$ mit der Position $\cdot$.

Im Ausführungsbeispiel wird eine binäre Folge $Q_k$ der Länge $L$-35 für Subträgerzahl $M$-49 und einen maximalen ganzzahligen Trägerfrequenzversatz von betragsmäßig $\theta$-4 verwendet. Eine mögliche Symbolfolge $Z_k$ vor differentieller Kodierung ist in der nachfolgenden Tabelle gemäß Gl. (5) und (7) dargestellt.

| K | 0 | 1 | 2 | 3 | 4 | 5 | 6* | 7 | 8 | 9 | 10 | 11 | 12 |
|---|---|---|---|---|---|---|----|---|---|---|----|----|----|
| $Z_k$ | $X_1$ | $X_2$ | 1 | -1 | 1 | -1 | 1 | 1 | 1 | 1 | -1 | 1 | 1 |

| K | 13 | 14 | 15 | 16 | 17 | 18 | 19 | 20 | 21 | 22 | 23 | 24 | 25 |
|---|----|----|----|----|----|----|----|----|----|----|----|----|----|
| $Z_k$ | -1 | -1 | -1 | 1 | -1 | -1 | -1 | -1 | -1 | 1 | 1 | 1 | -1 |

| K | 26 | 27 | 28 | 29 | 30 | 31 | 32 | 33 | 34 | 35 | 37 | 38 | 39 |
|---|----|----|----|----|----|----|----|----|----|----|----|----|----|
| $Z_k$ | -1 | -1 | 1 | -1 | 1 | 1 | -1 | 1 | 1 | -1 | 1 | -1 | 1 |

| K | 40* | 41 | 42 | 43 | 44 | 45 | 46 | 47 |
|---|-----|----|----|----|----|----|----|----|
| $Z_k$ | -1 | 1 | 1 | 1 | 1 | $X_3$ | $X_4$ | $X_5$ |

Mit * sind die Grenzen der entsprechenden Folge $Q_k$, gekennzeichnet. Es gilt $M_r$ - 6. Die Symbole $X_k$, $k=0$, ..., 5 werden z.B. mit Rechnersimulation auf minimale zeitliche Schwankungen des Betrags des OFDM Testsignals optimiert.

Die grobe Bestimmung des Anfangs eines Datenblocks durch das Mehrträgertestsignal beruht auf der Tatsache, daß, beim Empfang des Mehrträgertestsignals zum Zeitpunkt Null, dieses Empfangssignal $a_l(t)$ einen ISI-Anteil für $0 \leq t \cdot T_G$ und einen ISI-freien Anteil für $T_G \leq t \cdot 2T_S$ enthält. Im weitern sei angenommen, daß $T_G$ durch $G$, und $T$ durch $N$ Abtastwerte im digitalen Empfänger dargestellt wird.

Durch eine Kreuzkorrelation über $N$ komplexe Abtastwerte zwischen zwei lückenlos empfangenen Signalabschnitten der Gesamtdauer $2N$ erhält man eine Korrelationsmetrik. Diese Korrelationsmetrik wird für jeden ankommenden Abtastwert neu berechnet. Für einen Zeitabschnitt über mindestens G Abtastwerte ergibt sich ein fast konstanter Metrikwert. Bei einer laufenden Berechnung der Korrelationsmetrik erfolgt innerhalb dieser G Abtastwerte die grobe Bestimmung des Anfangs vom Datenblock. In diesem Bereich wird dabei eine Position $p_g$ desjenigen Abtastwertes als Ergebnis ausgegeben, wo die Korrelationsmetrik unter allen berechneten Metrikwerten innerhalb eines zeitlich bekannten Suchfensters minimal oder maximal ist. Der Wert $p_g$ dient als grobe Schätzung für die zeitliche Lage des Mehrträgertestsignals im Empfänger. Weil dieses Testsignal eine bekannte Länge hat, bestimmt $p_g$ auch den groben Anfang des ersten Symbols des Datenblocks. Die Bestimmung des Anfangs vom Datenblock wird im Verfahrensschritt 7 verfeinert.

Im Ausführungsbeispiel wird eine aus einer der angegebenen Quellen bekannte laufende Metrik aus den gespeicherten komplexen Abtastwerten des Empfangssignals $r(l)$ für jede Abtastzeit $n$ innerhalb eines Zeitfensters $[n_1, n_2]$ berechnet:

$$Metrik(n) = \sum_{l=0}^{N-1}\left(\left|r(n-l)\right|^2 + \left|r(n-l-N)\right|^2\right) - 2\left|\sum_{l=0}^{N-1}r(n-l)r*(n-l-N)\right|, \quad n\in[n_1, n_2]$$

Der Wert $p_g$ ergibt sich aus:

$$p_g = \min_{n\in[n_1, n_2]}(Metrik(n))$$

unter der Annahme, daß ein Empfangssignal tatsächlich vorliegt (keine Sendepause). $p_e$ stellt z.B. eine Speicheradresse dar. Alternativ dazu, kann erfindungsgemäß eine suboptimale Metrik verwendet werden, die aber sehr recheneffizient realisiert werden kann:

$$Metrik(n) = \left|\sum_{l=0}^{N-1}r(n-l)r*(n-l-N)\right|^2, \quad p_g = \max_{n\in[n_1, n_2]}(Metrik(n)) \tag{11}$$

In Kombinaion mit Verstärkungskontrolle im Empfänger (gain control, GC) ist diese Metrik auch bei Sendepausen im Suchfenster gut geeignet.

In einem dritten Verfahrensschritt wird eine Isolation eines Testsignals und Schätzung des feinen Trägerfrequenzversatzes, d.h. des Trägerfrequenzversatzes, der betragsmäßig kleiner als der halbe Subträgerabstand ist, durchgeführt.

Nachdem der Wert $p_g$ vorliegt, wird aus dem erkannten empfangenen digitalen Mehrträgertestsignal $a_1(n)$ das Teilsignal:

$$b(n) = a_1(n + p_g + \delta) \quad \text{für} \quad n = 0, ..., 2N-1 \tag{12}$$

isoliert. $\delta$ ist eine ganze Zahl, die die Position des Vektors b(n) zusätzlich definiert und auch zu Null gesetzt werden kann. Dieser Verarbeitungsablauf ist vereinfacht in Abb. 4 dargestellt. Die erfindungsgemäße Isolation von $b(n)$ hat zum Vorteil, daß $b(n)$ mit großer Wahrscheinlichkeit keine Abtastwerte mit ISI-Anteilen enthält. Vorteilhaft ist weiterhin, daß auch wenn einige wenige Abtastwerte von *b(n)* ISI-Rauschen enthalten, trotzdem ein sehr genauer Schätzwert für den feinen Frequenzversatz ermittelt werden kann.

Der Schätzwert $\alpha$ des feinen Trägerfrequenzversatzes wird durch eine Berechnung über $2K \leq 2N$ Abtastwerte des Signals *b(n)* geliefert. Ein aus den angegebenen Quellen bekanntes Verfahren dafür ist:

$$\alpha = \frac{1}{2\pi} \tan^{-1}\left( \frac{\text{Im}\left(\sum_{n=0}^{K-1} b*(n)b(n+N)\right)}{\text{Re}\left(\sum_{n=0}^{K-1} b*(n)b(n+N)\right)} \right), \quad \text{Re - Realteil, Im - Imaginärteil.} \tag{13}$$

Es gilt die Relation $\alpha = f_v/F_\Delta$, wo $f_v$ der absolute Trägerfrequenzversatz in Hz ist. Der Trägerfrequenzversatz wird normiert auf den Subträgerabstand als Ergebnis berechnet. Vorteilhafterweise liegt die Summe im Zähler und Nenner von Gl. (13) bereits im zweiten Verfahrensschritt vor.

In einem vierten Verfahrensschritt wird eine digitale Frequenzkorrektur des feinen Trägerfrequenzversatzes und Berechnung einer FFT durchgeführt.

Der Schätzwert $\alpha$ steuert dabei einen digitalen Oszillator, der das Signal $e^{-j2\pi\alpha n/N}FFT$, $n{-}0, ..., N_{FFT}{-}I$, erzeugt, $N_{FFT}$ ist die FFT-Länge für die Demodulation des OFDM Signals. Es gilt $N = rN_{FFT}$, wo r eine positive ganze Zahl ist, die den Überabtastungsfaktor im Empfänger darstellt.

Aus dem Teilsignal *b(n)* wird dann ein weiteres Signal:

$$c(n) = b(m+\gamma), \quad n=0, ..., N_{FFT}-1, \quad \gamma \text{ beliebige ganze Zahl mit } G < \gamma < N, \tag{14}$$

isoliert. Dieser Verarbeitungsablauf ist in Abb. 4 dargestellt. Vorteilhaft ist $\gamma = N/2$ zu setzen. Das Signal *c(n)* enthält dank des zeitlichen Versatzes $\gamma$ nur Abtastwerte aus $a_l(n)$ ohne ISI-Anteile.

Das Signal *c(n)* wird mit dem vom digitalen Oszillator erzeugten Signal multipliziert und dem FFT-Baustein zugeführt. Danach wird eine $N_{FFT}$-FFT berechnet. Dieser Verarbeitungsablauf ist in Abb. 4 vereinfacht dargestellt. Die FFT liefert die Werte $C^l_k$. Ein Vorteil der Erfindung ist es, daß wegen der Frequenzkorrektur mit dem digitalen Oszillator die FFT Werte $C^l_k$ kein Rauschen durch Subträgerinterferenz enthalten, was besonders günstig für die weiteren Synchronisationsabläufe ist.

In einem fünften Verfahrensschritt wird eine Isolation und Phasenkorrektur eines Testvektors aus den FFT Werten durchgeführt.

Die Werte $C^l_k$ unterscheiden sich von den FFT Werten, die aus dem ersten empfangenen OFDM Nettosymbol (Abb. 3) des OFDM Testsignals zum richtigen Zeitpunkt berechnet würden, lediglich durch eine Phasenverschiebung um $(\varphi_k + 2\pi\gamma k/N_{FFT})$, wo $\varphi_k$ der Phasenfehler durch Ungenauigkeit der Schätzung $p_g$ ist. Es werden nur *M* Werte $C^l_k$ benötigt, nämlich die mit Indizes aus $I_M$. Es erfolgt eine Isolation dieser M FFT Werte um den Vektor $d_1$ mit den Elementen $D^l_k$ zu erhalten:

$$d_1 = (D^1_k | k=0, ..., M-1) = (C^1_k | k \in I_M) \tag{15}$$

Dieser Verarbeitungsablauf ist in Abb. 5 dargestellt. Für die weiteren Synchronisationsabläufe ist es günstig, den Phasenfehler $2\pi\gamma k, N_{FFT}$ der Symbole $C^l_k$ zu eliminieren. Jedes dieser Symbole wird deshalb mit $e^{j2\pi\gamma kN}FFT$ multipliziert. So entsteht der phasenkorrigierte Vektor $d_2$ mit den Elementen $D^2_k$:

$$d_2 = (D^2_k | k = 0, ..., M-1) = (C^1_k e^{-j2\pi\gamma k/N_{FFT}} | k \in I_M) \tag{16}$$

Dieser Verarbeitungsablauf ist in Abb. 5 auch dargestellt.

Falls erfindungsgemäß $\gamma = N/2$ gewählt wird, gilt vorteilhafterweise die einfache Multiplikation:

$$d_2 = (C^1_k(-1)^k \mid k \in I_M).$$

In einem sechsten Verfahrensschritt wird eine Isolation eines Testvektors und Schätzung des ganzzahligen Trägerfrequenzversatzes, d.h. des Trägerfrequenzversatzes, der betragsmäßig ein Vielfaches des Subträgerabstandes ist, durchgeführt.

Es wird dabei ein Schätzvektor $z_1$, bestehend aus der komplexen Symbolfolge $Z^1_k$, durch die differentielle Dekodierung von $D^2_k$ gebildet:

$$z_1 = (Z^1_k = conj(D^2_k)D^2_{k+1} \mid k=0, ..., M-2) \tag{17}$$

wo conj($\bullet$) der konjugiert komplexe Wert von $\bullet$ bezeichnet.

Zur Schätzung des ganzzahligen Trägerfrequenzversatzes wird nun im Schätzvektor die Position der Training-sequenz $Q_k$ gesucht. Deren Anfang $k_0$ liegt ohne ganzzahligen Frequenzversatz bei:

$$k_0 = int((M_r-1)/2) + 2\theta \tag{18}$$

Die erfindungsgemäße Lösung bestimmt den ganzzahligen Trägerfrequenzversatz zwischen Sender und Emp-fänger indem $(2\theta+1)$ Korrelationen $M_i$, $i = -\theta$. $-\theta+1,..., \theta-1$, $\theta$ nach dem folgenden Verfahren berechnet werden:

$$M_i = \sum_{l=0}^{L-1} Z^1_{l,k_0+i} conj(Q_l) \, , \, i = -\theta, ..., \theta \tag{19}$$

Der ganzzahlige Frequenzversatz $m$ wird gleich dem Wert $i$, der dem maximalen Korrelationsbetrag $|M_i|$ entspricht, gesetzt:

$$m = \max_{i \in [-\theta, \theta]} (|M_i|) \tag{20}$$

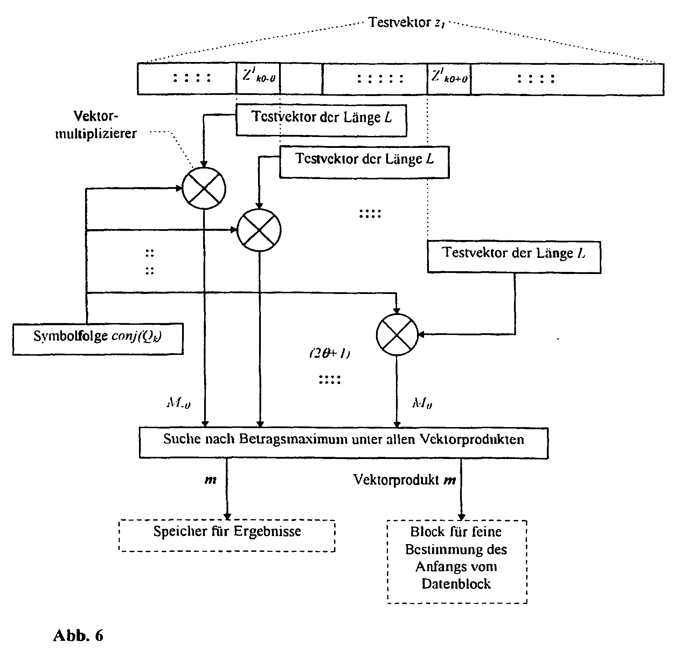

Dieser Verarbeitungsablauf ist in Abb. 6 dargestellt.

In einem siebenten Verfahrensschritt wird eine Isolation eines Testvektors und Schätzung des verbleibenden Zeitversatzes zum richtigen Anfang des Datenblocks. d.h. feine Schätzung des Anfangs des OFDM Datenblocks, durchgeführt.

Die erfindungsgemäße feine Schätzung des Symbolanfangs vom ersten Datensymbol erfolgt nach Kenntnis von $m$ gemäß dem Verfahren:

$$p_f = \frac{N_{FFT}}{2\pi} \tan^{-1} \left( \frac{Im\left(\sum_{l=0}^{M-2} Z^1_{l+m} conj(Z_l)\right)}{Re\left(\sum_{l=0}^{M-2} Z^1_{l+m} conj(Z_l)\right)} \right), \text{ wo } Z^1_k = 0 \text{ für } k < 0 \text{ und } k > (M-2) \text{ gesetzt wird} \tag{21}$$

Der Ansatz für diesen Verarbeitungsablauf ist in Abb. 6 dargestellt. Die Schätzung $p_f$ besitzt eine vom Kanal abhängige

geringe Ungenauigkeit $\lambda > 0$, die durch entsprechende sendeseitige Verlängerung des Schutzintervalls $T_G$ kompensiert wird.

In einem achten Verfahrensschritt wird eine Berechnung des Anfangs des ersten OFDM Datensymbols anhand der Ergebnisse vom Schritt 2 und 7 durchgeführt.

Der exakte Anfang $\Delta$ des ersten OFDM Symbols des empfangenen Datenblocks ergibt sich erfindungsgemäß durch die korrigierte Addition von $p_g$ und $p_f$:

$$\Delta = p_g + r(p_f + 2N_{FFT} - \lambda) \tag{22}$$

wo int($\Delta$) als Adresse im Speicher für komplexe Abtastwerte des Empfangssignals verwendet wird und auf die exakte Position vom ersten Abtastwert des ersten Datensymbols des Datenblocks zeigt. Der Wert $\Delta$ kann auch als Regelgröße zur Steuerung des Abtasttaktes der Analog-Digital-Wandler im Empfänger dienen.

In einem neunten Verfahrensschritt wird eine Berechnung des Trägerfrequenzversatzes zwischen Sender und Empfänger anhand der Ergebnisse vom Schritt 3 und 6 durchgeführt.

Der gesamte auf den Subträgerabstand normierte Trägerfrequenzversatz $\varepsilon$ zwischen Sender und Empfänger ergibt sich erfindungsgemäß durch die Addition von $m$ und $\alpha$:

$$\varepsilon = m + \alpha \tag{23}$$

Dieser Schätzwert wird für eine digitale Frequenzkorrektur oder eine Nachregelung der Frequenzsynthese im Empfänger verwendet.

Der gesamte erfindungsgemäße Verarbeitungsablauf mit der Reihenfolge der einzelnen Verfahrensschritte ist in Abb. 1 dargestellt. Die entsprechende Anordnung ist in Abb. 7 dargestellt.

**Patentansprüche**

1. Verfahren zum Empfang eines Mehrträgersignals, insbesondere für eine einmalige Übertragung eines Datenblocks, wobei ein Mehrträgertestsignal (OFDM) mit periodischem zeitlichem Aufbau zusammen mit dem Datenblock ausgesendet wird, und dieses Mehrträgertestsignal (OFDM) zur kombinierten Messung vom Anfang ($\Delta$) des ersten Datensymbol des Datenblocks und von einem eventuellen Trägerfrequenzversatz ($\varepsilon$) zwischen Sender und Empfänger nach der Gesamtheit folgender nacheinander ausgeführter Verfahrensschritte in einem digitalen Empfänger verwendet wird:

    a) grobe Messung vom Anfang ($p_g$) des Datenblocks durch die Auswertung des Mehrträgertestsignals (OFDM), ohne daß eine FFT dabei berechnet wird

    b) Bestimmung des eventuell vorhandenen feinen Trägerfrequenzversatzes ($\alpha$) zwischen Sender und Empfänger durch die Isolation und Auswertung eines Teils des periodischen Mehrträgertestsignals (b), ohne daß eine FFT dabei berechnet wird

    c) Isolation und digitale Frequenzkorrektur von $N_{FFT}$ Abtastwerten aus dem periodischen Mehrträgertestsignal (OFDM) und Berechnung einer FFT der Länge $N_{FFT}$ aus diesen Werten

    d) Isolation und eventuell Phasenkorrektur eines Testvektors $d_1$ der Länge $M < N_{FFT}$ aus den berechneten FFT Werten

    e) Berechnung eines Testvektors $z_1$ der Länge $(M-1)$ durch differentielle Dekodierung des eventuell phasenkorrigierten Testvektors $d_1$

    f) Messung von einem eventuellen vorhandenen ganzzahligen Trägerfrequenzversatz ($m$) zwischen Sender und Empfänger mit Maximalwert von betragsmäßig $\theta$ Subträgerabständen durch Isolation von zumindest $(L+2\theta)$ Werten aus $z_1$ und Durchführung von $(2\theta+1)$ Korrelationen mit einer zugrunde liegenden bekannten Trainingsequenz $Q_k$ der Länge $L$

    g) feine Messung vom Anfang ($p_f$) des Datenblocks zumindest durch Korrelation des Testvektors $z_1$ mit einer zugrunde liegenden bekannten Trainingsequenz der Maximallänge $(M-1)$, die $Q_k$ als Teilsequenz enthält

    h) exakte Bestimmung vom Anfang ($\Delta$) des ersten Datensymbols im Datenblock durch Addition des Anfangs

($p_g$) des Datenblocks der groben Messung und eines korrigierten Wertes des Anfangs ($p_f$) des Datenblocks der feinen Messung.

i) exakte Bestimmung des gesamten Trägerfrequenzversatzes zwischen Sender und Empfänger ($\varepsilon$) durch Addition des ganzzahligen Trägerfrequenzversatzes (m) und des feinen Trägerfrequenzversatzes ($\alpha$).

2. Verfahren nach Anspruch 1, **dadurch gekennzeichnet, daß** die grobe Messung vom Anfang ($p_g$) des Datenblocks zusätzlich und zuerst durch die Auswertung eines Einträgertestsignals erfolgt, wobei das Einträgertestsgnal vor dem Mehrträgertestsignal im Abstand von einer im Empfänger bekannten Zeit $t_\Delta$ abgestrahlt wird.

3. Verfahren nach Anspruch 2, **dadurch gekennzeichnet, daß** das Einträgertestsignal durch eine Gruppe benachbarter Subträger des Mehrträgerübertragungssystems erzeugt wird, wobei mindestens ein Subträger dieser Gruppe zur Übertragung einer im Empfänger bekannten komplexen Symbolfolge endlicher Länge dient und die anderen Subträger mit Null zwecks Frequenztrennung belegt sind.

4. Verfahren nach Anspruch 1, **dadurch gekennzeichnet, daß** dem Mehrträgertestsignal ein Symbolblock $c_1$ mit der Länge M differentiell kodierter Symbole, zugeordnet wird, so daß:

a) $c_1$ in einem zusammenhängenden Abschnitt die beidseitig periodisch erweiterte Trainingssequenz $Q_k$ konstanter Amplitude mit der Länge L und sehr guter periodischer Autokorrelation enthält

b) die Länge der periodischen Erweiterung auf jeder Seite der Trainingssequenz gleich mindestens dem betragsmäßig größtmöglichen ganzzahligen Trägerfrequenzversatz $\theta$ zwischen Sender und Empfänger ist

c) $c_1$, auch eine zweite Trainingsequenz, bestehend aus beliebigen Symbolen der gleichen konstanten Amplitude, enthalten kann, die die periodisch erweiterte Trainingssequenz $Q_k$ beidseitig umrandet

5. Verfahren nach Anspruch 4 zur Erzeugung eines Mehrträgertestsignals, **dadurch gekennzeichnet, daß**:

a) der Symbolblock $c_1$ durch eine IFFT verarbeitet wird

b) der IFFT Ausgangsvektor durch periodische Wiederholung auf die doppelte Länge fortgesetzt wird

c) das in b) gewonnene periodische Signal mit einem Schutzintervall als Vorsatz versehen wird, wobei das Schutzintervall eine Kopie vom Endeteil dieses Signals darstellt und die doppelt so lang ist wie das Schutzintervall $T_G$ in jedem Datensymbol des Mehrträgerübertragungssystems

6. Verfahren nach Anspruch 1 oder 4, **dadurch gekennzeichnet, daß** die Bestimmung des ganzzahligen Trägerfrequenzversatzes (m) zwischen Sender und Empfänger nach der Berechnung einer FFT und durch folgende Verfahrensschritte erfolgt:

a) bei jeder der $(2\theta+1)$ Korrelationen wird ein Vektorabschnitt der Länge L aus dem Testvektor $z_1$ isoliert und mit der konjugiert komplexen Trainingssequenz $Q_k$ elementeweise multipliziert

b) das erste Element des Vektorabschnittes für die erste Korrelation hat die Position $(k_0 - \theta)$, wo $k_0$ der Position des ersten Symbols von $Q_k$ im Symbolblock $c_1$ des Mehrträgertestsignal entspricht

c) die isolierten Vektorabschnitte zweier aufeinanderfolgende Korrelationen überlappen sich um jeweils (L-1) Elemente

d) aus den berechneten $(2\theta+1)$ Korrelationsergebnissen, wird dasjenige mit dem maximalen Betrag bestimmt

e) die ganzzahlige Abweichung von $k_0$ der Anfangsposition des Vektorabschnittes, der das Korrelationsergebnis mit dem maximalen Betrag liefert, wird zur Bestimmung des ganzzahligen Trägerfrequenversatzes verwendet

7. Verfahren nach Anspruch 1, 4 oder 6, **dadurch gekennzeichnet, daß** die feine Bestimmung des Anfangs ($p_f$)des Datenblocks nach der Berechnung einer FFT, durch eine Korrelation des Testvektors $z_l$ mit dem um einen eventuell festgestellten ganzzahligen Versatz verschobenen, differentiell dekodierten und nachfolgend komplex konjugierten Symbolblock $c_1$, und durch Berechnung des Winkels des so gewonnenen Korrelationsergebnisses durchgeführt wird.

8. Verfahren nach Anspruch 7, **dadurch gekennzeichnet, daß** das benötigte Schutzintervall in jedem Symbolsignal des Mehrträgerubertragungssystems um mindestens die Ungenauigkeit der feinen Bestimmung des Anfangs des Datenblocks sendeseitig verlängert wird.

9. Ein Verfahren nach einem der Ansprüche 1 bis 5, **dadurch gekennzeichnet, daß** für jeden Abtastwert des Empfangssignals innerhalb einer endlichen Anzahl von Abtastwerten eine Metrik berechnet wird, und nach Empfang aller dieser Abtastwerte die maximale aller berechneten Metriken zur groben Bestimmung des Anfangs vom Datenblock verwendet wird.

10. Eine Anordnung für ein Verfahren nach den obengenannten Ansprüchen, die zumindest aus einer Vorrichtung zur Berechnung einer FFT, einem Speicher für FFT Werte und Ergebnisse der Verarbeitungsabläufe, einem komplexen Multiplizierer/Addierer, mindestens je einer Vorrichtung zur Berechnung von $tan^{-1}$, Wurzelberechnung und digitale Frequenzsynthese und mindestens je einer Vorrichtung zur Isolation, differentieller Dekodierung und Korrelation für eine jeweilige Testsequenz besteht, sowie eventuell zumindest einem komplexen Vektormultiplizierer und einem komplexen Vektoraddierer, und die folgende Schaltungsstruktur aufweist:

- Ein Multiplizierer für jeweils zwei komplexe Abtastwerte $r(l)$ und $r(l-N)$ des Empfangssignals ist an mindestens einen FIFO (First-In-First-Out) Speicher $F1$ geschaltet

- Ein Akkumulator $A1$ erhält Eingabewerte aus zumindest dem Eingang und dem negierten Ausgang des FIFO Speichers $F1$ und schreibt die berechneten Ergebnisse in einen Speicher $S1$.

- Eine Vorrichtung $V1$ zur Wurzelberechnung oder Berechnung vom Betragsquadrat ist an den Akkumulator $A1$ geschaltet

- Eine Recheneinheit für Berechnung von Metriken der zeitlichen Synchronisation erhält Eingabewerte aus zumindest der Vorrichtung $V1$ und schreibt die berechneten Metriken in einen Metrikspeicher $MS$

- Eine Vorrichtung zur Suche nach Maximal- oder Minimalwert ist an den Speicher MS geschaltet, addressiert den Speicher $S1$ und steuert zumindest eine Vorrichtung zur Berechnung von $tan^{-1}$, die an den Speicher $SI$ geschaltet ist, sowie einen Isolator $I1$ von einem Testsignal

- Eine Vorrichtung für die Vektormultiplikation vom Testsignal aus dem Isolators $I1$ mit der Ausgabe einer Vorrichtung zur digitalen Frequenzsynthese - die letzte von einer Vorrichtung zur Berechnung von $tan^{-1}$ eingespeist - liefert Eingabewerte für die FFT Vorrichtung

- Ein Speicher $S2$ für FFT Werte ist an einen Isolator $I2$ von einem Testvektor geschaltet

- Eine Vorrichtung zur Vektormultiplikation vom Testvektor des Isolators $I2$ mit der Ausgabe eines ROM (Read Only Memory) ist an eine Vorrichtung zur differentiellen Dekodierung geschaltet, deren Ergebnisse in einen Speicher $S3$ geschrieben werden.

- Der Speicher $S3$ ist an einen Isolator $I3$ geschaltet, der Testvektoren für die Korrelationen mit einer Training-sequenz $Q_k$ vorbereitet. Der Ausgang vom Isolator $I3$ ist an eine Vorrichtung zur Vektormultiplikation mit einem ROM Trainingsvektor, bestehend aus den Werten conj($Q_k$), geschaltet. Die Norm der berechneten Vektoren wird aus einer Vorrichtung zur Betragsbildung in einen Speicher $S4$ geschrieben.

- Eine Vorrichtung für Suche nach Maximalwert ist an den Speicher $S4$ und an eine Recheneinheit $R2$ zur Berechnung des exakten Trägerfrequenzversatzes $\varepsilon$ geschaltet.

- Eine vom berechneten ganzzahligen Trägerfrequenzversatz gesteuerte Vorrichtung zur Vektormultiplikation ist an einen Isolator $I4$ von einem Testvektor aus dem Speicher $S3$ sowie an einen ROM für eine Trainingsequenz conj($Z_k$) geschaltet, und der berechnete Vektor wird elementeweise aufsummiert und einer Vorrichtung zur Berechnung von $tan^{-1}$ zugeführt, deren Ausgang an eine Recheneinheit $R1$ zur Berechnung der exakten Position $\Delta$ des ersten OFDM Symbols vom Datenblock geschaltet ist.

- Die Recheneinheiten $R1$ und $R2$ bestehen aus mindestens einem reellen Multiplizierer mit einer Konstante sowie einem reellen Addierer und schreiben ihre Ergebnisse in einen Speicher für Ergebnisse der Synchronisation.

## Claims

1. Method for receiving a multicarrier signal, in particular for a single transmission of a data block, in which case a multicarrier test signal (OFDM) having a cyclic time layout is transmitted together with the data block, and this multicarrier test signal (OFDM) is used for combined measurement of the start ($\Delta$) of the first data symbol of the data block and of any carrier-frequency shift (e) between the transmitter and receiver after all the following method steps, which are carried out after one another, in a digital receiver:

a) coarse measurement of the start ($p_g$) of the data block by evaluation of the multicarrier test signal (OFDM) without any FFT being calculated in the process

b) determination of the fine carrier-frequency shift ($\alpha$) which may be present between the transmitter and receiver, by isolation and evaluation of a part of the cyclic multicarrier test signal (b) without any FFT being calculated in the process

c) isolation and digital frequency correction of $N_{FFT}$ samples from the cyclic multicarrier test signal (OFDM) and calculation of an FFT of length $N_{FFT}$ from these values

d) isolation and possibly phase correction of a test vector $d_1$ of length $M<N_{FFT}$ from the calculated FFT values

e) calculation of a test vector $z_1$ of length $(M-1)$ by differential decoding of the possibly phase-corrected test vector $d_1$

f) measurement of any integer carrier-frequency shift (m) which may be present between the transmitter and receiver with a maximum value of $\theta$ subcarrier intervals, in terms of magnitude, by isolation of at least $(L+2\theta)$ values from $z_1$ and by carrying out $(2\theta+1)$ correlations using a basic, known training sequence $Q_k$ of length L

g) fine measurement of the start $(p_f)$ of the data block at least by correlation of the test vector $z_1$ with a basic, known training sequence of maximum length $(M-1)$, which contains $Q_k$ as a subsequence

h) exact determination of the start $(\Delta)$ of the first data symbol in the data block by addition of the start $(p_g)$ of the data block from the coarse measurement and a corrected value for the start $(p_f)$ of the data block from the fine measurement.

i) exact determination of the total carrier-frequency shift between the transmitter and receiver $(\varepsilon)$ by addition of the integer carrier-frequency shift (m) and the fine carrier-frequency shift $(\alpha)$.

2. Method according to Claim 1, **characterized in that** the coarse measurement of the start $(p_g)$ of the data block is carried out first of all and additionally by evaluation of a single-carrier test signal, in which case the single-carrier test signal is transmitted before the multicarrier test signal, with a time interval $t\Delta$ which is known in the receiver.

3. Method according to Claim 2, **characterized in that** the single-carrier test signal is produced by a group of adjacent subcarriers of the multicarrier transmission system, in which case at least one subcarrier in this group is used for transmission of a complex symbol sequence which is known in the receiver and has a finite length, and the other subcarriers are set to zero, for the purpose of frequency separation.

4. Method according to Claim 1, **characterized in that** the multicarrier test signal is assigned a symbol block $c_1$ with length M of differentially coded symbols, so that:

a) in a cohesive section, $c_1$ contains the training sequence $Q_k$, which is expanded cyclically on both sides, of constant amplitude with length L and very good cyclic autocorrelation,

b) the length of cyclic expansion on each side of the training sequence is equal at least to the integer carrier-frequency shift $\theta$ having the greatest possible magnitude between the transmitter and receiver,

c) $c_1$ can also contain a second training sequence, comprising any required symbols of the same constant amplitude, which are bounded on both sides by the cyclically expanded training sequence $Q_k$.

5. Method according to Claim 4 for producing a multicarrier test signal, **characterized in that**

a) the symbol block $c_1$ is processed by means of an IFFT

b) the IFFT output vector is continued by cyclic repetition to twice the length

c) the cyclic signal obtained in b) is provided with a guard interval as a prefix, in which the guard interval represents a copy of the end part of this signal and is twice as long as the guard interval $T_G$ in each data symbol of the multicarrier transmission system.

6. Method according to Claim 1 or 4, **characterized in that** the determination of the integer carrier-frequency shift (m) between the transmitter and receiver is carried out after calculating an FFT and by means of the following method steps:

a) for each of the $(2\theta+1)$ correlations, a vector section of length L is isolated from the test vector $z_1$ and is multiplied element-by-element by the complex-conjugate training sequence $Q_k$

b) the first element of the vector section for the first correlation is in the position $(k_0-\theta)$, where $k_0$ corresponds to the position of the first symbol of $Q_k$ in the symbol block $c_1$ of the multicarrier test signal

c) the isolated vector sections of two successive correlations each overlap by $(L-1)$ elements

d) from the calculated $(2\theta+1)$ correlation results, the correlation result having the maximum magnitude is determined,

e) the integer discrepancy of $k_0$ from the initial position of the vector section which supplies the correlation result having the maximum magnitude is used to determine the integer carrier frequency offset.

7. Method according to Claim 1, 4 or 6, **characterized in that** the fine determination of the start $(p_f)$ of the data block is carried out after the calculation of an FFT, by correlation of the test vector $z_1$ with the symbol block $c_1$ which is shifted through a possibly defined integer shift, is differentially decoded and then has the complex-conjugate taken, and by calculation of the angle of the correlation result obtained in this way.

8. Method according to Claim 7, **characterized in that** the guard interval required in each symbol signal of the multicarrier transmission system is lengthened at the transmission end at least by the inaccuracy of the fine determination of the start of the data block.

9. Method according to one of Claims 1 to 5, **characterized in that** a metric is calculated for each sample of the received signal within a finite number of samples, and, after reception of all these samples, the maximum of all the calculated metrics is used for coarse determination of the start of the data block.

10. Arrangement for a method according to the abovementioned claims, which comprises at least an apparatus for calculating the FFT, a memory for FFT values and results of the processing sequences, a complex multiplier/adder, at least one apparatus in each case for calculating $tan^{-1}$, root calculation and digital frequency synthesis, and at least one apparatus in each case for isolation, differential decoding and correlation for the respective test sequence, possibly as well as at least one complex vector multiplier and one complex vector adder, and which has the following circuit structure:

  - A multiplier for in each case two complex samples $r(l)$ and $r(l-N)$ of the received signal is connected to at least one FIFO (First-In-First-Out) memory $F1$
  - An accumulator $A1$ receives input values from at least the input and the negated output of the FIFO memory $F1$, and writes the calculated results to a memory $Sl$.
  - An apparatus $V1$ for root calculation or calculation of the square of the magnitude is connected to the accumulator $A1$
  - A computation unit for calculating metrics for time synchronization receives input values from at least the apparatus $V1$ and writes the calculated metrics to a metric memory $MS$
  - An apparatus for searching for a maximum or minimum value is connected to the memory $MS$, addresses the memory $S1$ and controls at least one apparatus for calculating $tan^{-1}$, which is connected to the memory $S1$, as well as an isolator $I1$ from a test signal
  - An apparatus for vector multiplication of the test signal from the isolator $I1$ by the output of an apparatus for digital frequency synthesis - the latter apparatus being supplied from an apparatus for calculating $tan^{-1}$ - supplies input values for the FFT apparatus
  - A memory $S2$ for FFT values is connected to an isolator 12 from a test vector
  - An apparatus for vector multiplication of the test vector of the isolator 12 by the output of a ROM (Read Only Memory) is connected to an apparatus for differential decoding, whose results are written to a memory $S3$.
  - The memory $S3$ is connected to an isolator $I3$ which prepares test vectors for the correlations with a training sequence $Q_k$. The output from the isolator $I3$ is connected to an apparatus for vector multiplication by a ROM training vector, comprising the values $conj(Q_k)$. The norm of the calculated values is written from an apparatus for magnitude formation to a memory $S4$.
  - An apparatus for searching for a maximum value is connected to the memory $S4$ and to a computation unit R2 for calculating the exact carrier-frequency shift $\varepsilon$.
  - An apparatus, controlled by the calculated integer carrier-frequency shift, for vector multiplication is connected to an isolator $I4$ from a test vector from the memory $S3$, and to a ROM for a training sequence $conj(Z_k)$, and the calculated vector is added up element-by-element and is supplied to an apparatus for calculating $tan^{-1}$, whose output is connected to a computation unit $R1$ for calculating the exact position $\Delta$ of the first OFDM symbol of the data block.
  - The computation units $R1$ and $R2$ comprise at least one real multiplier by a constant as well as one real adder, and write their results to a memory for the results

**Revendications**

1. Procédé pour la réception d'un signal multi-porteuse, en particulier pour une transmission unique d'un bloc de données, le signal test multi-porteuse (OFDM) avec une structure temporelle périodique étant envoyé avec le bloc de données et ce signal test multi-porteuse (OFDM) étant utilisé pour la mesure combinée du début ($\Delta$) du premier symbole de données du bloc de données et d'un éventuel déplacement de fréquence porteuse ($\varepsilon$) entre émetteur et récepteur, selon la totalité des étapes du procédé, réalisées les unes après les autres dans un récepteur numérique :

a) mesure approximative du début ($p_g$) du bloc de données par l'exploitation du signal test multi-porteuse (OFDM) sans qu'ici une transformation de Fourier rapide (FFT) ne soit calculée,

b) détermination d'un déplacement précis de fréquence porteuse éventuellement présent ($\alpha$) entre émetteur et récepteur par l'isolation et l'exploitation d'une partie du signal test multi-porteuse (b) périodique sans qu'ici une FFT ne soit calculée,

c) isolation et correction de fréquence numérique de $N_{FFT}$ valeurs d'analyse issues du signal test multi-porteuse périodique (OFDM) et calcul d'une FFT de longueur $N_{FFT}$ à partir de ces valeurs,

d) isolation et éventuellement correction de phase d'un vecteur test $d_1$ de longueur $M < N_{FFT}$ à partir des valeurs FFT calculées,

e) calcul d'un vecteur test $z_1$ de longueur $(M-1)$ par décodage différentiel du vecteur test $d_1$ éventuellement avec phase corrigée,

f) mesure d'un déplacement de fréquence porteuse (m) de valeur entière éventuellement présent entre émetteur et récepteur avec une valeur maximale de $\theta$ intervalles de sous-porteuse par isolation d'au moins $(L+2\theta)$ valeurs issues de $z_1$ et réalisation de $(2\theta+1)$ corrélations avec une séquence training $Q_k$ de base, connue, de longueur L,

g) mesure précise du début ($p_t$) du bloc de données au moins par corrélation du vecteur test $z_1$ avec une séquence training de base, connue, de longueur maximale $(M-1)$ qui contient $Q_k$ comme séquence partielle,

h) détermination exacte du début ($\Delta$) du premier symbole de données dans le bloc de données par addition du début ($p_g$) du bloc de données de la mesure approximative et d'une valeur corrigée du début ($p_t$) du bloc de données de la mesure précise,

i) détermination exacte du déplacement de fréquence porteuse total entre émetteur et récepteur ($\varepsilon$) par addition du déplacement de fréquence porteuse de valeur entière (m) et du déplacement de fréquence porteuse précis ($\alpha$).

2. Procédé selon la revendication 1, **caractérisé en ce que** la mesure approximative du début ($p_g$) du bloc de données a lieu, en plus et en premier, par l'exploitation d'un signal test mono-porteuse, le signal test mono-porteuse étant émis avant le signal test multi-porteuse avec un intervalle de temps $t_\Delta$ connu dans le récepteur.

3. Procédé selon la revendication 2, **caractérisé en ce que** le signal test mono-porteuse est produit par un groupe de sous-porteuses voisines du système de transmission à porteuses multiples, au moins une sous-porteuse de ce groupe servant pour la transmission d'une suite complexe de symboles, connue dans le récepteur et de longueur finie, et les autres sous-porteuses étant mises à zéro pour une discrimination de fréquences.

4. Procédé selon la revendication 1, **caractérisé en ce qu'**un bloc de symbole $c_1$ avec la longueur M de symboles codés de façon différentielle est associé au signal test multi-porteuse de telle façon que :

a) $c_1$ contient dans une section continue la séquence training $Q_k$, élargie périodiquement des deux côtés, d'amplitude constante, avec la longueur L et une très bonne autocorrélation périodique,

b) la longueur de l'élargissement périodique de chaque côté de la séquence training est au moins égale au plus grand déplacement entier possible de fréquence porteuse $\theta$ entre émetteur et récepteur,

c) $c_1$ peut contenir aussi une deuxième séquence training, contenant des symboles quelconques de la même amplitude constante, qui encadre la séquence training $Q_k$ élargie périodiquement des deux côtés.

5. Procédé selon la revendication 4 pour la production d'un signal test multi-porteuse **caractérisé en ce que** :

a) le bloc de symbole $c_1$ est traité par une transformation de Fourier rapide inverse (IFFT),

b) le vecteur de sortie IFFT est doublé en longueur par une répétition périodique,

c) le signal périodique obtenu dans b) est muni d'un intervalle de garde tel qu'un préfixe, l'intervalle de garde représentant une copie de la partie finale de ce signal et qui est deux fois plus longue que l'intervalle de garde $T_G$ dans chaque symbole de données du système de transmission à porteuses multiples.

6. Procédé selon la revendication 1 ou 4, **caractérisé en ce que** la détermination du déplacement de fréquence porteuse (m) entier entre émetteur et récepteur a lieu par le calcul d'une FFT et par les étapes de procédé suivantes :

a) lors de chacune des $(2\theta+1)$ corrélations, une section vectorielle de longueur L est isolée du vecteur test $z_1$ et multipliée élément par élément avec la séquence training $Q_k$ conjuguée complexe,

b) le premier élément de la section vectorielle pour la première corrélation a la position $(k_0-\theta)$, $k_0$ correspondant à la position du premier symbole de $Q_k$ dans le bloc de symbole $c_1$ du signal test multi-porteuse,

c) les sections vectorielles isolées de deux corrélations successives se chevauchent à chaque fois de $(L-1)$

éléments,

d) à partir des $(2\theta+1)$ résultats de corrélation calculés, on détermine celui avec la valeur maximale,

e) l'écart entier de $k_0$ de la position initiale de la section vectorielle, qui fournit le résultat de corrélation avec la valeur maximale, est utilisé pour déterminer le déplacement de fréquence porteuse entier.

**7.** Procédé selon la revendication 1, 4 ou 6, **caractérisé en ce que** la détermination précise du début ($p_t$) du bloc de données, après le calcul d'une FFT, est réalisée par une corrélation du vecteur test $z_1$ avec le bloc de symbole $c_1$ décalé d'un déplacement entier éventuellement déterminé, décodé de façon différentielle puis conjugué complexe, et par le calcul de l'angle du résultat de corrélation ainsi obtenu.

**8.** Procédé selon la revendication 7, **caractérisé en ce que** l'intervalle de garde nécessaire dans chaque signal de symbole du système de transmission à porteuses multiples est prolongé, côté émetteur, d'au moins l'inexactitude de la détermination précise du début du bloc de données.

**9.** Un procédé selon l'une des revendications 1 à 5, **caractérisé en ce qu'**une métrique est calculée pour chaque valeur d'analyse du signal de réception parmi un nombre fini de valeur analysées, et après la réception de toutes ces valeurs d'analyse, le maximum de tous les métriques calculées est utilisé pour la détermination approximative du début du bloc de données.

**10.** Un système pour un procédé selon les revendications mentionnées ci-dessus qui comprend au moins un dispositif pour le calcul d'une transformation de Fourier rapide, une mémoire pour les valeurs de transformation de Fourier rapide et pour des résultats de déroulement du traitement, un multiplicateur/additionneur, au moins à chaque fois un dispositif pour le calcul de $\tan^{-1}$, le calcul de racine et de la synthèse de fréquence numérique et au moins à chaque fois un dispositif pour l'isolation, le décodage différentiel et la corrélation pour une séquence de test correspondante ainsi qu'éventuellement au moins un multiplicateur vectoriel complexe et un additionneur vectoriel complexe, et qui comprend la structure de circuit suivante :

- un multiplicateur, pour à chaque fois deux valeurs d'analyse $r(1)$ et $r(1-N)$ complexes du signal de réception, est connecté à au moins une mémoire F1 FIFO (First-In-First-Out),

- un accumulateur A1 reçoit des valeurs d'entrée issues d'au moins l'entrée et la sortie inversée de la mémoire F1 FIFO et écrit les résultats calculés dans une mémoire S1,

- un dispositif V1 pour le calcul de racine ou le calcul du carré de la valeur absolue est connecté à l'accumulateur A1,

- une unité de calcul pour le calcul des métriques de la synchronisation temporelle reçoit des valeurs d'entrée au moins issues du dispositif V1 et écrit les métriques calculées dans une mémoire de métrique MS,

- un dispositif pour la recherche de valeur maximale ou minimale est connecté à la mémoire MS, adresse la mémoire S1 et commande au moins un dispositif pour le calcul de $\tan^{-1}$, connecté à la mémoire S1, ainsi qu'un isolateur I1 d'un signal test,

- un dispositif pour la multiplication vectorielle du signal test issu de l'isolateur I1 avec la sortie d'un dispositif pour la synthèse de fréquence numérique - la dernière alimentée par un dispositif pour le calcul de $\tan^{-1}$ -fournit des valeurs d'entrée pour le dispositif FFT,

- une mémoire S2 pour des valeurs FFT est connectée à un isolateur I2 d'un vecteur test,

- un dispositif pour la multiplication vectorielle du vecteur test de l'isolateur 12 avec la sortie d'une ROM (Read Only Memory) est connecté à un dispositif pour le décodage différentiel, dont les résultats sont écrits dans une mémoire S3,

- la mémoire S3 est connectée à un isolateur 13 qui prépare des vecteurs test pour les corrélations avec une séquence training $Q_k$ ; la sortie de l'isolateur I3 est connectée à un dispositif pour la multiplication vectorielle avec un vecteur training ROM composé de valeurs $\text{conj}(Q_k)$ ; la norme des vecteurs calculés est écrite à partir d'un dispositif de formation de valeur absolue dans une mémoire S4 ;

- un dispositif pour la recherche de valeur maximale est connecté à la mémoire S4 et à une unité de calcul R2 pour le calcul du déplacement de fréquence porteuse $\varepsilon$ exact ;

- un dispositif pour la multiplication vectorielle, commandé par le déplacement de fréquence porteuse entier calculé, est connecté à un isolateur 14 d'un vecteur test issu de la mémoire S3 ainsi qu'à une ROM pour une séquence training $\text{conj}(Z_k)$, et le vecteur calculé est totalisé élément par élément et est envoyé à un dispositif pour le calcul de $\tan^{-1}$, dont la sortie est connectée à une unité de calcul R1 pour le calcul de la position exacte $\Delta$ du premier symbole OFDM du bloc de données ;

- les unités de calcul R1 et R2 comportent au moins un multiplicateur réel avec une constante ainsi qu'un additionneur réel et écrivent leurs résultats dans une mémoire de résultats de synchronisation.

Speicher für komplexe Abtastwerte des Empfangssignals

| Messung der Positions $p_e$ des Einträgertestsignals (optional) | Messung der Position $p_g$ des periodischen OFDM Testsignals | Isolator des Testsignals $h$ |
|---|---|---|

| Schätzer des feinen Frequenzversatzes $\alpha$ | digitaler Oszillator $\exp(-j2\pi\alpha n/N_{FFT})$ |
|---|---|

Isolator des Testsignals $c$

$\otimes$

| FFT Berechnung der Länge $N_{FFT}$ | Isolator des Testvektors $d_1$ | Phasenkorrektur des Testvektors $d_1$ |
|---|---|---|

$d_2$

| differentieller Dekodierer | Isolator des Schätzvektors $z_1$ |
|---|---|

| Isolator und gleitender Korrelator mit der Sequenz $Q_k$ | Um $m$ versetzter Korrelator mit der Sequenz $Z_k$ |
|---|---|

| Suche nach Maximum unter allen Korrelationsbeträgen | |
|---|---|

| Bestimmung des ganzzahligen Frequenzversatzes $m$ | Berechnung des feinen Zeitpunktes des Symbolanfangs $p_f$ |
|---|---|

$m$

| Berechnung des Frequenzversatzes $\varepsilon$ | Berechnung des Symbolanfangspunktes $\Delta$ |
|---|---|

Speicher für berechnete Synchronisationsergebnisse

**Abb. 1**

Leistungspegel

Modulationsträger (z.B.
2-DPSK)

restliche
OFDM
Subträger

restliche
OFDM
Subträger

Wert 0          Wert 0                                    Wert 0          Wert 0

Frequenzlage

: : :

k-2            k-1            k            k+1            k+2

: : :

Subträgergruppe zur Bildung
des Einträgertestsignals

**Abb. 2**

Testsignal a(t)

| Schutz-intervall | 1. OFDM Nettosymbol $c(t-2T_G)$ | 2. OFDM Nettosymbol $c(t-T-2T_G)$ |
|---|---|---|

$2T_G$                    T                                    T

Zeitpunkt 0                                                    Zeitachse t

**Abb. 3**

Speicher für komplexe Abtastwerte des Empfangssignals

Isolation von $b$

Adreßgenerator
(Inkrement 1)

$b(0) \ldots b(2N-1)$

Block für feine
Schätzung des
Freqenzversatzes

Setzen

Block für grobe
Messung des
Anfangs vom
Datenblock

Register für $p_g$

Adreßgenerator
(Inkrement $r$)

Isolation von $c$

$c(0) \ldots c(N_{FFT}-1)$

Setzen

$\gamma$ (ROM)

$exp(-j2\pi\alpha n/N_{FFT})$
$n=0,\ldots,N_{FFT}-1$

$\alpha$

FFT
der Länge
$N_{FFT}$

**Abb. 4**

FFT
der Länge
$N_{FFT}$

$C^1_k$

Speicher für FFT Ausgabewerte

Isolation von $d_1$

$d_1 = (C^1_k| \ k \in I_M)$

$exp(-j2\pi k/N_{FFT})$
$k \in I_M$

$d_2$

Speicher für
$d_2 = (D^2_k| \ k=0, \ldots, M-1)$

**Abb. 5**

**Abb. 6**

Speicher für komplexe Abtastwerte r(l) des Empfangssignals

r(l)

r(l-N)

MUL

FIFQ Speicher F1(N)

FIFO Speicher (N)

$|\bullet|^2$
+
$|\bullet|^2$

Akkumulator A1

Akkumulator

Speicher S1

Metrikspeicher MS

$|\bullet|$ V1
oder
$|\bullet|^2$

MAX / MIN

Recheneinheit für Metriken (+ MUL)

Im / Re
und
$\tan^{-1}$

$P_g$

Isolator I1 → c(n)

$\alpha$

$\exp(-j2\pi(\bullet)n/N_{FFT})$
n=0,...$N_{FFT}$-1

$N_{FFT}$

⊗

FFT
($N_{FFT}$)

Zu den
Recheneinheiten
R1 und R2

FFT Speicher S2 ($N_{FFT}$)

**Abb. 7**

Abb. 7 (fortgesetzt)